# EUROPEAN PATENT APPLICATION

(11) **EP 4 654 623 A1**
(43) Date of publication of application: **26.11.2025**
(21) Application number: 24752861.5
(22) Date of filing: 05.02.2024
(51) Int. Cl.: H04W 4/029

(54) **COMMUNICATION METHOD AND APPARATUS**

(30) Priority: 10.02.2023 CN 202310139427
(71) Applicant: Huawei Technologies Co., Ltd., Shenzhen, Guangdong 518129 (CN)
(72) Inventor: JIA, Jianxin, Shenzhen, Guangdong 518129 (CN); LI, Guanglei, Shenzhen, Guangdong 518129 (CN); ZONG, Zaifeng, Shenzhen, Guangdong 518129 (CN)
(74) Representative: Epping - Hermann - Fischer
(86) International application number: PCT/CN2024/076100
(87) International publication number: WO 2024/165006

(57) **Abstract**

This application provides a communication method and apparatus, to improve positioning reliability when a positioning reference device participates in positioning. According to the method, an access management network element may receive a first message, where the first message may include first information and second information. The first information may indicate that the second information is of a type of a container related to a positioning reference device. The second information is used to carry a supplementary service message. The access management network element may send the second information to a first location management network element based on the first information.

## Description

### CROSS-REFERENCE TO RELATED APPLICATIONS

This application claims priority to Chinese Patent Application No. 202310139427.9, filed with the China National Intellectual Property Administration on February 10, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

Based on a current terminal device (for example, user equipment (user equipment, UE)) positioning technology, when target UE is positioned, to improve positioning accuracy, the positioning accuracy can be enhanced through a positioning reference device. The positioning reference device may be configured to assist a location management function (location management function, LMF) or UE in improving accuracy of positioning the UE.

Currently, the positioning reference device is registered with an access and mobility management network element (access and mobility management function, AMF), and sends a message to the LMF through the AMF. However, in a current solution, the AMF cannot learn whether content carried in the message is related to a positioning reference service. As a result, the AMF cannot properly process the message, and positioning reliability is degraded when the positioning reference device participates in positioning.

### SUMMARY

This application provides a communication method and apparatus, to improve positioning reliability when a positioning reference device participates in positioning.

According to a first aspect, a communication method is provided. The method may be implemented by an access management network element or a component in the access management network element, and the access management network element may also be referred to as a communication apparatus. The component in this application may include, for example, at least one of a chip, a chip system, a processor, a transceiver, a processing unit, or a transceiver unit. For example, an execution body is the access management network element. The method may be implemented by using the following steps: The access management network element receives a first message, where the first message includes first information and second information, the first information indicates that the second information is of a type of a container related to a positioning reference device, and the second information is used to carry a supplementary service message; and the access management network element sends the second information to a first location management network element based on the first information.

Based on the first aspect, the access management network element may learn, based on the first information, that the second information from the positioning reference device is of a type related to a positioning reference device, and may learn that the second information is related to location service information sent by the positioning reference device. This helps improve performance of a reference location service.

Optionally, the "supplementary service message", a "PRU-related message", a "PRU message or PRU information", a "PRU-related supplementary service message", or a "PRU supplementary service message" may be replaced with each other.

Optionally, "the first information indicates that the second information is of a type of a container related to a positioning reference device" may be understood as "the first information indicates that the second information is a container related to a positioning reference device"; or optionally, "the first information indicates that the second information is of a type of a container related to a positioning reference device" may be understood as "the first information indicates that a type of the second information is a container related to a positioning reference device".

In addition, the descriptions of the first aspect may alternatively be replaced with the following: The access management network element receives a first message, where the first message includes first information, and the first information indicates that a location service request is to transmit a PRU message, a PRU-related message, PRU information, or PRU-related information, or the first information indicates that a purpose of the location service request is to transmit the PRU message, the PRU-related message, the PRU information, or the PRU-related information. The access management network element sends the PRU message, the PRU-related message, the PRU information, or the PRU-related information to a first location management network element based on the first information.

In a possible implementation, the supplementary service message or the second information may include (or be used to carry) at least one of a registration (registration) message, an association (association) message, an attach (attach) message, a de-registration (de-registration) message, a de-association (de-association) message, or a de-attach (de-attach) message. In other words, "the second information is used to carry the supplementary service message" may be replaced with: The second information includes (or is used to carry) at least one of the registration information, the association message, the attach message, the de-registration message, the de-association message, or the de-attach message of the positioning reference device.

Optionally, in this application, the second information may be a container related to the positioning reference device (a PRU-related container), or a type of the second information is of a type of a container related to a positioning reference device.

Optionally, in this application, the "container related to the positioning reference device", a "PRU-related LCS container (PRU-related LCS container)", a "PRU container", a "PRU message container (PRU message container type)", and a "PRU-related location service message container (PRU-related location service message)" may be replaced with each other.

Optionally, in this application, the "positioning reference device", a "positioning reference unit", a "PRU (positioning reference unit, PRU)", and a "reference terminal device (reference UE)" may be replaced with each other.

Optionally, in this application, when the positioning reference device is described, for brevity, the "positioning reference device" may be replaced with any one or more of the following terms:
a reference device (reference device), reference user equipment (reference UE), a reference node (reference node), a transmission reception point (transmission reception point, TRP), a correction device (correction device), correction user equipment (correction UE), calibration user equipment (calibration UE), a calibration device (calibration device), a reference point (reference point), a positioning reference unit (positioning reference unit, PRU), a positioning reference device (positioning reference device, PRD), a differential device (differential device), a differential unit (differential unit), a positioning differential device (positioning differential device, PDD), a positioning differential unit (positioning differential unit, PDU), a correction point (correction point), a calibration point (calibration point), and the like, where the reference node may include the reference user equipment, a reference access network device, user equipment, or an access network device. The transmission reception point may include a reference transmission reception point (reference TRP).

Alternatively, the positioning reference device may be user equipment and/or an access network device and/or a part of the access network device (for example, an NG-RAN, an evolved universal terrestrial radio access network (evolved universal terrestrial radio access network, E-UTRAN), a gNB, an eNB, a central unit (central unit, CU), a distributed unit (distribute unit, DU), or a transmission reception point TRP).

Optionally, in this application, the PRU message, the PRU-related message, the PRU information, or the PRU-related information includes the registration message/the association message/the attach message/the de-registration message/the de-association message/the de-attach message. Optionally, in this application, "registration", "attach", and "association" may be replaced with each other.

In a possible implementation, the first message further includes reference location information of the positioning reference device, and the access management network element may further determine, based on the reference location information, that the positioning reference device is located in a service area of the first location management network element.

Therefore, a case in which the positioning reference device is registered with an inappropriate location management network element can be avoided.

It should be understood that, in this application, the reference location information may include at least one of the following: a cell identifier (cell ID), an access network device identifier, a tracking area identity (tracking area ID, TAI), a tracking area code (tracking area code, TAC), and a public land mobile network (public land mobile network, PLMN) identifier. In addition, the reference location information may further include global positioning system (global positioning system, GPS) geographic location information, a sector identifier, a PCI, an antenna identifier, a DU identifier, or the like.

In a possible implementation, the first message includes reference location information of the positioning reference device, and the access management network element may further determine, based on the reference location information, that a location of the positioning reference device is outside a service area of the first location management network element, where the first location management network element may be a source LMF of the positioning reference device; and the access management network element sends third information to the first location management network element, where the third information indicates the first location management network element to perform registration modification.

It should be noted that performing registration modification may be understood as performing registration modification on the positioning reference device, may be understood as performing de-registration on the positioning reference device, may be understood as de-attaching the positioning reference device, or may be understood as performing de-association on the positioning reference device. In other words, "registration modification", "association modification", "attach modification", "de-registration", and "de-association" may be replaced with each other.

It should be understood that the first message may include any one or more of the following:
registration request (registration request), registration modification (registration modification request), association request (association request), de-association request, association modification, attach request (attach request), de-attach request (de-attach request), attach modification, registration complete (registration complete), de-registration accept (de-registration accept), de-registration request (de-registration request), service request (service request), service reject (service reject), service accept (service accept), control plane service request (control plane service request), uplink non-access stratum transport (UL NAS transport), mobile originated location request (mobile originated location request, MO-LR), authentication response (authentication response), authentication failure (authentication failure), configuration update complete (configuration update complete), identity response (identity response), notification response (notification response), security mode complete (security mode complete), security mode reject (security mode reject), security protected 5th-generation (5th-generation, 5G) mobile communication non-access stratum message (security protected 5GS NAS message), 5G mobility management status (5G mobility management status, 5GMM status), network slice-specific identity authentication complete (network slice-specific authentication complete), LTE positioning protocol (LTE positioning protocol, LPP) protocol data unit (LTE positioning protocol packet data unit, LPP PDU), new radio (new ratio, NR) protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), NR message (NR message), a NR request or provide location information message (NR request/provide location information message), NR capability transfer (NR capability transfer); NR request or provide assistance data message (NR request/provide assistance data message), NR request or provide capability message (NR request/provide capability message), NR procedure (NR procedure), NR capability transfer (NR capability transfer), PDU session establishment request (PDU session establishment request), PDU session modification request (PDU session modification request), PDU session release request (PDU session release request), remote UE report (remote UE report), NG setup request (NG setup request), transmission reception point information response (TRP information response), capability exchange (capability exchange), register SS (register SS), activate SS (activate SS), deactivate SS (deactivate SS), user service (userUserService), and the like.

Based on the implementation, when the positioning reference device is located outside a service range of a source location management network element, the access management network element may trigger de-registration of the positioning reference device from the source location management network element, so that LMF switching efficiency for the positioning reference device can be improved, thereby improving positioning reliability when the positioning reference device participates in positioning.

Optionally, in this application, "the location of the positioning reference device is outside the service area of the first location management network element", "the location of the positioning reference device is not in the service area of the first location management network element", "the positioning reference device moves out of (or leaves) the service area of the first location management network element", "a location management network element (for example, the first location management network element) is unsuitable or unable to support location for a terminal device (LMF is unsuitable or unable to support location for the UE)", "a serving location management network element is not applicable", and "a target location management network element (or a second location management network element) is a more appropriate location management network element" may be replaced with each other.

Optionally, in this application, "performing registration modification", "initiating registration modification", "sending a registration modification request", and "sending a registration modification indication" may be replaced with each other.

Optionally, in this application, "registration modification", "attach modification", and "association modification" may be replaced with each other.

Optionally, in this application, "registration", "attach", and "association" may be replaced with each other.

In a possible implementation, the access management network element selects a second location management network element, and the access management network element may further send an identifier or an address of the second location management network element to the first location management network element.

Optionally, the access management network element may select the second location management network element based on the reference location information of the positioning reference device. It should be understood that an identifier or an address of a location management network element may include one or more of the following:
internet protocol (internet protocol, IP) address, full qualified domain name (full qualified domain name, FQDN), network function (network function, NF) instance identifier (NF instance ID), network element identifier (identifier, ID), tunnel identifier, port number, media access control (media access control, MAC) address, or the like.

Based on the implementation, when the positioning reference device is located outside the service range of the source location management network element, the access management network element may select a target location management network element based on the reference location information of the positioning reference device, and send an identifier or an address of the target location management network element to the source location management network element, so that LMF switching efficiency for the positioning reference device can be improved, thereby improving performance of a positioning reference service.

According to a second aspect, a communication method is provided. The method may be implemented by a positioning reference device or a component in the positioning reference device, and the positioning reference device may also be referred to as a communication apparatus. The component in this application may include, for example, at least one of a chip, a chip system, a processor, a transceiver, a processing unit, or a transceiver unit. For example, an execution body is the positioning reference device. The method may be implemented by using the following steps: The positioning reference device determines to send a supplementary service message; and the positioning reference device sends a first message, where the first message includes first information and second information, the first information indicates that the second information is a container related to a positioning reference device, and the second information includes (or is used to carry) the supplementary service message.

Optionally, that the positioning reference device determines to send the supplementary service message may be replaced with the following: The positioning reference device starts a PRU-related registration procedure, association procedure, or attach procedure. In this case, the supplementary service message may include a registration request.

Optionally, the "PRU-related registration procedure", a "PRU registration procedure", a "PRU-related association procedure", a "PRU association procedure", a "PRU-related attach procedure", a "registration procedure", an "association procedure", and an "attach procedure" may be replaced with each other.

In a possible implementation, the supplementary service message includes registration information, an association message, an attach message, a de-registration message, a de-association message, or a de-attach message.

Optionally, "start", "initiate (instigate/initiate/launch/invoke)", and "trigger (trigger)" may be replaced with each other.

Optionally, the solution shown in the second aspect may be replaced with: The positioning reference device determines to send a supplementary service message; and the positioning reference device sends a first message, where the first message includes first information and second information, the first information indicates that the second information is a container related to a positioning reference device, and the second information includes (or is used to carry) the supplementary service message.

Optionally, the solution shown in the second aspect may be replaced with: The positioning reference device starts a PRU-related registration procedure; the positioning reference device sets a container type to first information, where the first information indicates that second information (or a container) is a PRU-related container, a PRU-related location service message container, a PRU container, or a PRU message container; and the positioning reference device sends the first information to an access management network element. Further, optionally, the positioning reference device may further send the second information (or the container) to the access management network element.

Optionally, the solution shown in the second aspect may be replaced with: The positioning reference device starts a PRU-related registration procedure; and the positioning reference device sends a first message, where the first message includes first information, and the first information indicates that a location service request (for example, a location service request) is to transmit a PRU message, a PRU-related message, PRU information, or PRU-related information, or the first information indicates that a purpose of the location service request is to transmit the PRU message, the PRU-related message, the PRU information, or the PRU-related information. Optionally, the first message may include or may be the location service request, or the location service request may be sent independently of the first message.

Based on the second aspect, in an optional manner, the positioning reference device receives a registration modification message from a first location management network element, where the registration modification message (an attach modification message, a management modification message, a de-registration message, a de-association message, or a de-attach message) is used to change a registration status. In this application, the registration modification message may alternatively be replaced with the attach modification message, the management modification message, the de-registration message, the de-association message, or the de-attach message. Changing the registration status may alternatively be replaced with changing an attach status or an association status.

Based on the second aspect, in an optional manner, the registration modification message further carries an identifier or an address of a second location management network element. The positioning reference device sends a registration request to the second location management network element. In this application, the registration request may alternatively be replaced with an association request, an attach request, a registration message, an association message, or an attach message.

Based on the second aspect, in an optional manner, the PRU message (the PRU-related message, the PRU information, or the PRU-related information) includes a registration message, an association message, an attach message, a de-registration message, a de-association message, or a de-attach message.

According to a third aspect, a communication method is provided. The method may be implemented by a first location management network element or a component in the first location management network element, and the first location management network element may also be referred to as a communication apparatus. The component in this application may include, for example, at least one of a chip, a chip system, a processor, a transceiver, a processing unit, or a transceiver unit. For example, an execution body is the first location management network element. The method may be implemented by using the following steps: The first location management network element receives third information from an access management network element, where the third information indicates to perform registration modification; and the first location management network element performs registration modification based on the third information. Optionally, performing registration modification may be understood as performing registration modification on a positioning reference device.

Optionally, performing registration modification and performing registration modification on the positioning reference device may be replaced with each other.

Optionally, indicating a location management network element (for example, the first location management network element) to perform registration modification may be replaced with indicating the location management network element to send, initiate, or perform registration modification, may be replaced with indicating the location management network element to send, initiate, or perform attach modification, may be replaced with indicating the location management network element to send, initiate, or perform association modification, may be replaced with indicating to deregister the positioning reference device, de-associate the positioning reference device, or de-attach the positioning reference device, may be replaced with sending, initiating, or performing de-registration of the positioning reference device, may be replaced with sending, initiating, or performing de-association of the positioning reference device, or may be replaced with sending, initiating, or performing de-attaching of the positioning reference device.

In a possible implementation, the first location management network element may further receive an identifier or an address of a second location management network element from the access management network element; and the first location management network element may further send the identifier or the address of the second location management network element to a positioning reference device.

In a possible implementation, the identifier or the address of the second location management network element is determined based on reference location information of the positioning reference device.

According to a fourth aspect, a communication apparatus is provided. The apparatus may implement the method according to any one of the first aspect to the third aspect and the possible implementations of the first aspect to the third aspect. The apparatus has a function of the access management network element, the positioning reference device, or the first location management network element. The apparatus is, for example, a terminal device, a function module of the terminal device, a network device, or a function module of the network device.

In an optional implementation, the apparatus may include modules that one-to-one correspond with the methods/operations/steps/actions described in the first aspect to the third aspect and any possible implementation of the first aspect to the third aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in any one of the first aspect to the third aspect and the possible implementations of the first aspect to the third aspect, the apparatus may include a communication unit and a processing unit.

According to a fifth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect to the third aspect and the possible implementations of the first aspect to the third aspect.

In a possible implementation, the processor and the memory are integrated together.

In another possible implementation, the memory is located outside the communication apparatus. The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface. According to a sixth aspect, a computer-readable storage medium is provided. The computer-readable storage medium is configured to store a computer program or instructions, and when the computer program or the instructions are run, the method according to any one of the first aspect to the third aspect and the possible implementations of the first aspect to the third aspect is implemented.

According to a seventh aspect, a computer program product including instructions is provided. When the computer program product runs on a computer, the method according to any one of the first aspect to the third aspect and the possible implementations of the first aspect to the third aspect is implemented.

According to an eighth aspect, an embodiment of this application further provides a communication apparatus, configured to perform the method according to any one of the first aspect to the third aspect and the possible implementations of the first aspect to the third aspect. According to a ninth aspect, a chip system is provided. The chip system includes a logic circuit (or understood as that the chip system includes a processor, and the processor may include a logic circuit, and the like), and may further include an input/output interface. The input/output interface may be configured to input a message, or may be configured to output a message. The input/output interface may be a same interface. In other words, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending function and the receiving function in the method in any one of the first aspect to the third aspect and the possible implementations of the first aspect to the third aspect. The logic circuit may be further configured to transmit a message to the input/output interface, or receive a message from another communication apparatus through the input/output interface. The chip system may be configured to implement the method according to any one of the first aspect to the third aspect and the possible implementations of the first aspect to the third aspect. The chip system may include a chip, or may include the chip and another discrete component.

Optionally, the chip system may further include a memory, and the memory may be configured to store instructions. The logic circuit may invoke the instructions stored in the memory to implement a corresponding function.

According to a tenth aspect, a communication system is provided. The communication system may include at least two of an access management network element, a positioning reference device, and a first location management network element. The access management network element may be configured to perform the method according to the first aspect and any possible implementation of the first aspect. The positioning reference device may be configured to perform the method according to the second aspect and any possible implementation of the second aspect. The first location management network element may be configured to perform the method according to the third aspect and any possible implementation of the third aspect.

For technical effects brought by the second aspect to the tenth aspect, refer to the descriptions of the first aspect. Details are not described herein again.

### BRIEF DESCRIPTION OF DRAWINGS

FIG. 1A is a diagram of an architecture of a wireless communication system according to an embodiment of this application;
FIG. 1B is a diagram of an architecture of another wireless communication system according to an embodiment of this application;
FIG. 2 is a schematic flowchart of a communication method according to an embodiment of this application;
FIG. 3 is a schematic flowchart of a communication method according to an embodiment of this application;
FIG. 4 is a schematic flowchart of another communication method according to an embodiment of this application;
FIG. 5 is a diagram of a structure of a communication apparatus according to an embodiment of this application;
FIG. 6 is a diagram of a structure of another communication apparatus according to an embodiment of this application; and
FIG. 7 is a diagram of a structure of another communication apparatus according to an embodiment of this application.

### DESCRIPTION OF EMBODIMENTS

The following further describes in detail this application with reference to accompanying drawings. Embodiments of this application provide a communication method and apparatus. The method and the apparatus in this application are based on a same technical concept. Because problem-resolving principles of the method and the apparatus are similar, mutual reference may be made to implementation of the apparatus and the method, and repeated parts are not described.

In the descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may indicate the following cases: Only A exists, both A and B exist, and only B exists, where A and B may be singular or plural. In addition, "/" indicates "or". For example, a/b indicates a or b.

To facilitate understanding of the technical solutions in this application, the following first briefly describes technical terms in this application.
(1) User equipment, also referred to as a terminal device, is a device having a wireless transceiver function, and may communicate with one or more core network (core network, CN) devices (or may also be referred to as core devices) via an access network device (or may also be referred to as an access device) in a (radio) access network (radio access network, (R)AN) device. In this application, the user equipment and the terminal device may be replaced with each other.

The user equipment may also be referred to as an access terminal, a terminal, a subscriber unit, a subscriber station, a mobile station, a remote station, a remote terminal, a mobile device, a user terminal, a user agent, a user apparatus, or the like. The user equipment may be deployed in (deployed in) land, where the deployment includes indoor or outdoor, or handheld or vehicle-mounted deployment; may be deployed on a water surface (such as a ship); or may be deployed in the air (for example, on an airplane, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the user equipment may be a handheld device having a wireless communication function, a computing device or another device connected to a wireless modem, a vehicle-mounted device, a wearable device, an uncrewed aerial vehicle device, a terminal in the internet of things or the internet of vehicles, a terminal in any form in a 5th-generation (5th-generation, 5G) mobile communication network and a future network, relay user equipment, a terminal in a future evolved PLMN, or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A type, a category, or the like of the terminal device is not limited in embodiments of this application.

The user equipment may further include a terminal-side device, for example, a local switch (local switch, LSW) and/or customer premise equipment (customer premise equipment, CPE), or the user equipment may access a network via the LSW or the CPE.

In embodiments of this application, the UE that registers with a network may be understood as a user. One UE may correspond to one subscriber identity module (subscriber identity module, SIM) card. To be specific, when one SIM card is installed on the terminal device, the terminal device corresponds to one user UE, and when a plurality of SIM cards are installed on the terminal device, the terminal device corresponds to a plurality of pieces of user UE.

In this application, a network device is a device that can provide a wireless access function for a terminal. The network device may support at least one wireless communication technology, for example, long term evolution (long term evolution, LTE), new radio (new radio, NR), or wideband code division multiple access (wideband code division multiple access, WCDMA).

For another example, the network device may include a core network (CN) device, and the core network device includes, for example, an AMF.

In this application, the (radio) access network device may be configured to provide a network access function for authorized user equipment in a specific area, and can use transmission tunnels of different quality based on a level of the user equipment, a service requirement, and the like.

The (R)AN device can manage radio resources and provide an access service for the user equipment, to forward a control signal and user equipment data between the user equipment and a core network. The (R)AN may alternatively be understood as a base station in a conventional network.

For example, the access network device in embodiments of this application may be any communication device that has a wireless transceiver function and that is configured to communicate with user equipment. The access network device includes but is not limited to: an NR new generation access network (new generation radio access network, NG-RAN), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (a TRP or a TP) in a 5G system such as an NR system, may be one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may alternatively be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network (core network, CN). This is not limited in this application.

A user plane network element is used for packet routing and forwarding, handling of quality of service (quality of service, QoS) of user plane data, and the like.

In the 5G communication system, the user plane network element may be a user plane function (user plane function, UPF) network element. In a future communication system, the user plane network element may still be the UPF network element, or may have another name. This is not limited in this application.

A data network element is configured to provide a network for data transmission.

In the 5G communication system, the data network element may be a data network (data network, DN) element. In a future communication system, the data network element may still be the DN element, or may have another name. This is not limited in this application.

An authentication server performs security authentication for users. In the 5G communication system, the authentication server may be an authentication server function (authentication server function, AUSF) network element.

An access management network element is mainly used for mobility management, access management, and the like. In the 5G communication system, the access management network element may be an access and mobility management function (access and mobility management function, AMF), and mainly performs functions such as mobility management and access authentication/authorization. In addition, the access management network element is further responsible for transferring a user policy between a terminal and a policy control function (policy control function, PCF) network element. The AMF may receive non-access stratum (non-access stratum, NAS) signaling (for example, mobility management (mobility management, MM) signaling or session management (session management, SM) signaling) of the terminal device and related signaling of the access network device (for example, N2 signaling at a base station granularity exchanged with the AMF), to complete a user registration procedure, SM signaling forwarding, and mobility management.

A session management network element is mainly configured to: manage a session, allocate and manage an internet protocol (internet protocol, IP) address of user equipment, select an endpoint that can manage a user plane function interface and a policy control and charging function interface, perform downlink data notification, and the like. In the 5G communication system, the session management network element may be a session management function (session management function, SMF) network element, and completes terminal IP address allocation, UPF selection, charging and QoS policy control, and the like.

A location management network element may be configured to provide a location service for the terminal device. The location management network element is, for example, a location management function (location management function, LMF) network element. In addition, the location management network element may be a location server (location server), an evolved location management function network element (evolved location management function, eLMF), or another network element with a similar function. The name is not limited in this application. An application network element may be an application function (application function, AF) network element in the 5G communication system, represents an application function of a third party or an operator, is an interface for obtaining external application data in a 5G network, and is mainly configured to transfer a requirement of an application side for a network side.

A unified data management network element is responsible for management of a user identifier, subscription data, and authentication data, and serving network element registration management of the user. In the 5G communication system, the unified data management network element may be a unified data management (unified data management, UDM).

A policy control network element includes a user subscription data management function, a policy control function, a charging policy control function, QoS control, and the like, is a unified policy framework for guiding network behavior, and provides policy rule information and the like for a control plane function network element (for example, an AMF or an SMF network element). In the 5G communication system, the policy control network element may be a PCF.

A network function repository function network element provides a storage function and a selection function of network functional entity information for another core network element. In the 5G communication system, the network element may be a network function repository function (network function repository function, NRF) network element.

A network exposure network element may be a network exposure function (network element function, NEF) network element in the 5G communication system, is mainly configured to expose a service and a capability of a 3GPP network function to an AF, and may also enable the AF to provide information for the 3GPP network function.

A network slice selection function network element is responsible for selecting a network slice for UE. In the 5G communication system, the application network element may be a network slice selection function (network slice selection function, NSSF) network element.

In a future communication system, for example, a 6G communication system, the foregoing network element or device may still use a name of the network element or device in the 5G communication system, or may have another name. This is not limited in embodiments of this application. The functions of the network elements or devices may be implemented by one independent network element, or may be jointly implemented by several network elements. During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of this application.

In the 5G communication system, the application network element may be an application function (application function, AF) network element or may be an application server (application server, AS). In a future communication system, an application network element may still be the AF network element, or may have another name. This is not limited in this application.

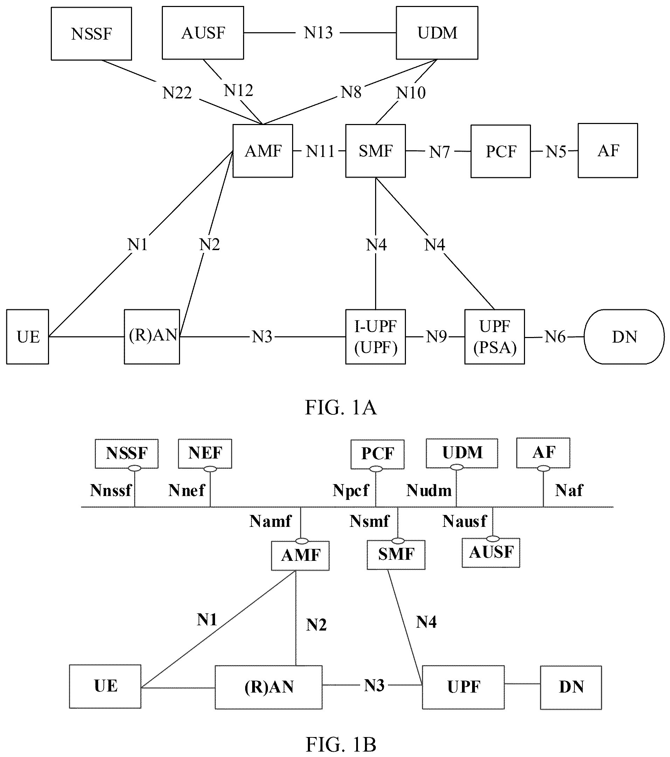

FIG. 1A and FIG. 1B are diagrams of a 5th generation (5th generation, 5G) network architecture. FIG. 1A is a diagram of a 5G network architecture in a non-service-based architecture, and FIG. 1B is a diagram of a 5G network architecture in a service-based architecture (service-based architecture, SBA). The service-based architecture is a basic architecture of a 5G network. "Service-based" is mainly implemented on a control plane. The essence of the SBA is to define network functions as several "service" modules that can be flexibly invoked according to three principles of "self-contained, reusability, and independent management". Based on this, an operator can flexibly customize networking based on a service requirement. Interaction between the network functions is implemented through service invoking. Each network function externally presents a common service-based interface, which can be invoked by an authorized network function or service. FIG. 1B is a diagram of an example of a service-based architecture of a 5G network. In the architecture, a core network element may communicate with another core network element through a service-based interface. For example, a service-based interface corresponding to an AMF is referred to as a Namf interface, and an interface corresponding to an LMF may be referred to as an Nlmf interface.

The 5G network architectures shown in FIG. 1A and FIG. 1B each may include three parts: a terminal, a DN, and an operator network. The following briefly describes functions of some network elements in the architecture.

It should be noted that in this application, a "terminal", a "terminal device", and "user equipment" may be replaced with each other.

The operator network may include but is not limited to one or more of the following network elements: an AUSF, a PCF, a UDM, an AF, an AMF, an SMF network element, a (R)AN device, a UPF, an NSSF, and the like. In the operator network, a network element or device other than the radio access network device may be referred to as a core network element or a core network device. In addition, some communication interfaces shown in FIG. 1A include the following interfaces. An N1 interface is a signaling-plane interface between the AMF and the UE, and is configured to exchange a signaling message between the core network and the UE. For example, the UE registers with the network, the UE establishes a PDU session, and the network side configures a policy for the UE.

An N2 interface is an interface between the AMF and the RAN, and is configured to transfer radio bearer control information from the core network to the RAN.

An N3 interface is an interface between the (R)AN and the UPF, and is configured to transfer service data of the UE between the RAN and the UPF.

An N4 interface is an interface between the SMF and the UPF, and is configured to transfer information between a control plane and a user plane, including that a control plane terminal device completes a network access operation based on subscription information of an operator.

An N6 interface is an interface between the UPF and the DN, and is configured to transfer service data of the UE between the UPF and the DN.

An N5 interface is an interface between the PCF and the AF.

An N7 interface is an interface between the PCF and the SMF, and is configured to deliver PDU session granularity and service data flow granularity control policies.

An N8 interface is an interface between the AMF and the UDM, and is used by the AMF to obtain access and mobility management-related subscription data and authentication data from the UDM, and used by the AMF to register current mobility management-related information of the UE with the UDM.

An N9 interface is an interface between two UPFs. For example, as shown in FIG. 1A, the N9 interface is an interface between an intermediate UPF (intermediate UPF, I-UPF) and a UPF used as a PDU session anchor (PDU session anchor, PSA).

An N10 interface is an interface between the SMF and the UDM, and is used by the SMF to obtain session management-related subscription data from the UDM, and used by the SMF to register current session-related information of the UE with the UDM.

An N11 interface is an interface between the SMF and the AMF, and is configured to transfer PDU session tunnel information between the RAN and the UPF, a control message sent to the UE, radio resource control information sent to the RAN, and the like.

An N12 interface includes an interface between the AMF and the AUSF.

An N13 interface includes an interface between the AUSF and the UDM.

An N22 interface includes an interface between the NSSF and the AMF.

It may be understood that the foregoing network elements or functions may be network elements in a hardware device, may be software functions that are run on dedicated hardware, or may be instantiated virtualization functions on a platform (for example, a cloud platform). Optionally, the network element or function may be implemented by one device, may be jointly implemented by a plurality of devices, or may be a functional module in one device. This is not specifically limited in embodiments of this application.

A session management network element, a user plane network element, and an access management network element in this application may be respectively the SMF, the UPF, and the AMF in FIG. 1, or may be network elements having functions of the SMF, the UPF, and the AMF in a future communication network such as a 6th generation (6th generation, 6G) network. This is not limited in this application. In embodiments of this application, an example in which the SMF, the UPF, and the AMF are respectively used as the session management network element, the user plane network element, and the access management network element is used for description.

A network architecture used to support a location service is provided in current technical specifications. The architecture may be extended based on the architecture shown in FIG. 1A or

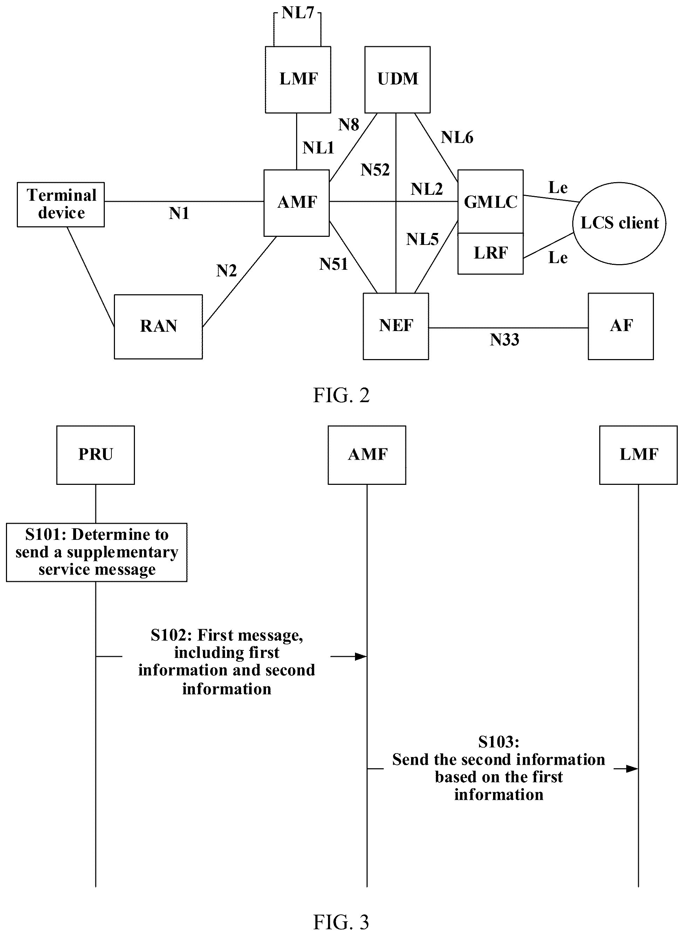

FIG. 1B. For example, in an architecture shown in FIG. 2, a gateway mobile location center (gateway mobile location center, GMLC) may be responsible for processing a location request of a location service, and selecting an appropriate AMF network element for the location service. A location retrieval function (location retrieval function, LRF) may be configured with the GMLC or configured separately, and is responsible for retrieving or verifying location information of UE. A location service (location service, LCS) client (LCS client, LCS Client) may send a location request to the GMLC through an Le interface between the GMLC and the LCS client to initiate a location service for the UE. An LMF network element is mainly responsible for performing location request management, location resource allocation, and determining a location of a terminal device during a location service.

As shown in FIG. 2, NL1 is an interface between an AMF and an LMF. NL7 is an interface between LMFs. N52 is an interface between a UDM and an NEF. NL2 is an interface between the AMF and the GMLC. NL5 is an interface between the NEF and the GMLC. N33 is an interface between the NEF and an AF. N51 is an interface between the AMF and the NEF.

With the rise of intelligence, vertical industries have increasingly urgent requirements for location. A location function of a 5G base station is introduced in 3GPP release (release) 16. Application scenarios are mainly classified into two types: a wide area location scenario and a local area location scenario. Typical wide area scenarios include smart internet of things (for example, elderly location and pet tracking). Typical local area location scenarios include smart manufacturing (for example, personnel location management and material location management), smart chemicals (for example, personnel location management, electronic fence, and one-click alarm reporting), and smart shopping malls and supermarkets (for example, product push and smart operations, customer flow analysis and shopping mall management, navigation and shopping guide, and parking and vehicle finding).

To improve positioning accuracy, a positioning reference device is configured to enhance the positioning accuracy. Optionally, in this application, the "positioning reference device" may be replaced with any one or more of the following: a reference device (reference device), reference user equipment (reference UE), a reference node (reference node), a transmission reception point (transmission reception point, TRP), a correction device (correction device), correction user equipment (correction UE), calibration user equipment (calibration UE), a calibration device (calibration device), a reference point (reference point), a positioning reference unit (positioning reference unit, PRU), a positioning reference device (positioning reference device, PRD), a differential device (differential device), a differential unit (differential unit), a positioning differential device (positioning differential device, PDD), a positioning differential unit (positioning differential unit, PDU), a correction point (correction point), a calibration point (calibration point), and the like, where the reference node may include reference user equipment, a reference access network device, user equipment, or an access network device. The transmission reception point may include a reference transmission reception point (reference TRP). Alternatively, the positioning reference device may be user equipment and/or an access network device and/or a part of the access network device (for example, an NG-RAN, an evolved universal terrestrial radio access network (evolved universal terrestrial radio access network, E-UTRAN), a gNB, an eNB, a central unit (central unit, CU), a distributed unit (distribute unit, DU), or a transmission reception point TRP).

Alternatively, the positioning reference device may be user equipment and/or an access network device and/or a part of the access network device (for example, an NG-RAN, an evolved universal terrestrial radio access network (evolved universal terrestrial radio access network, E-UTRAN), a gNB, an eNB, a CU, a DU, or a TRP).

The positioning reference device may be configured to assist a location management network element or UE in positioning the UE. Specifically, the positioning reference device may be configured to perform positioning measurement or measurement.

For example, the positioning reference device may have the following functions, or the positioning reference device may include a device having the following functions.
1. The positioning reference device may measure a downlink positioning reference signal and report (report) related measurement information to the location management network element. In this application, the location management network element may be an LMF network element, a location server, or an eLMF, or may be another network element having a similar function. The name is not limited in this application.

The reported related measurement information may include: a reference signal time difference (reference signal time difference, RSTD), a receiving-transmitting time difference (Rx-Tx time difference), a reference signal received power (reference signal received power, RSRP), and the like.

2. The positioning reference device may send a channel sounding reference signal (sounding reference signal, SRS) to the access network device (for example, the gNB or the eNB) or the part (for example, the TRP) of the access network device, so that the access network device or the part of the access network device performs measurement and reports measurement information related to the positioning reference device to the location management network element. The location management network element may be the LMF network element. The reported related measurement information may include: relative time of arrival (relative time of arrival, RTOA), a receiving-transmitting time difference, an angle of arrival (angle of arrival, AoA), and the like.

3. Location information of a device (for example, the positioning reference device or a to-be-positioned first device) may be known location information. For example, the location information may be preconfigured, for example, may be geographical location coordinate information (geographic coordinate point, GCP), may be location information configured by an operator, or may be location information measured, calculated, or estimated by using a positioning method.

For example, the location information may be location information measured, calculated, or estimated by using one or more of the following positioning methods. For another example, the location information may be location information obtained (obtained) by using one or more different positioning methods (positioning methods) or positioning techniques (positioning techniques): a global navigation satellite system (global navigation satellite system, GNSS), dynamic real-time kinematic (real-time kinematic, RTK), a radar (light detection and ranging, LIDAR), an observed time difference of arrival (observed time difference of arrival, OTDOA), an uplink time difference of arrival (uplink time difference of arrival, UL-TDOA), a downlink time difference of arrival (downlink time difference of arrival, DL-TDOA), an uplink angle of arrival (uplink angle of arrival, UL-AoA), a downlink angle of departure (downlink angle-of-departure, DL-AoD), a WLAN-based positioning method (WLAN-based positioning), a Bluetooth-based positioning method (Bluetooth-based positioning), multi-round trip time (multi-round trip time, Multi-RTT), a time difference of arrival (time difference of arrival, TDOA), an enhanced cell identifier (enhanced cell ID, ECID), terrestrial beacon system positioning (terrestrial beacon system positioning, TBS positioning), sensor-based positioning (sensor-based positioning), or the like. The location information of the positioning reference device may be reported to the location management network element (for example, the LMF).

4. The positioning reference device may report antenna direction information to the location management network element.

5. The positioning reference device may be used for timing errors estimation and compensation (timing errors estimation and compensation); the positioning reference device may be configured to mitigate a receiving or transmitting timing error (mitigate the Rx/Tx timing error); the positioning reference device may be configured to calculate a receiving or transmitting timing error (calculate the Rx/Tx timing error difference); the positioning reference device may be used for assisted calibration (assisted calibration); the positioning reference device may be configured to assist in generating calibration information (calibration information)/correction information (correction information)/differential information (differential information); the positioning reference device may generate calibration information/correction information/differential information; the positioning reference device may be configured to assist in generating timing calibration information (timing calibration information)/timing correction information (timing correction information)/timing differential information (timing differential information); the positioning reference device may generate timing calibration information/timing correction information/timing differential information; the positioning reference device may estimate and correct a valid timing error to support time calibration; the positioning reference device assists other UE, another positioning reference device, or another location management network element in generating a correction term (correction terms), to assist the other UE, the another positioning reference device, or the another location management network element in correcting a positioning measurement or positioning calculation result; the positioning reference device may mitigate and calibrate a timing error (mitigate and calibrate the timing errors); or the first device may be configured to improve positioning performance or positioning accuracy of an angle-based positioning method (angle-based positioning method), where the angle-based positioning method may include the UL-AoA positioning method and the DL-AoD positioning method that are described above.

6. The positioning reference device may be configured to or support a user equipment-assisted positioning method (UE-assisted positioning); the positioning reference device may be configured to or support a user equipment-based positioning method (UE-based positioning); or the positioning reference device may be configured to or support a network-based positioning method (network-based positioning). The "user equipment-assisted positioning" may be understood as that the positioning reference device reports measurement information to assist an LMF in calculating a final positioning result. The "user equipment-based positioning" may be understood as that the positioning reference device calculates a final positioning result based on assistance measurement information provided by a network (for example, an access network device, other UE, another positioning reference device, or an LMF) and/or measurement information obtained by the positioning reference device. The "network-based positioning" may be understood as that a network (for example, an LMF) calculates a final positioning result based on measurement information provided by at least one of an access network device, UE, and a positioning reference device.

7. The positioning reference device may be used for positioning measurement (positioning measurement), positioning estimation (positioning estimate), positioning computation (positioning computation), location computation (location computation), location measurement (location measurement), location estimation (location estimate), or measurement (measurement).

Currently, a terminal device may be registered with an AMF. In addition, because the positioning reference device may be the terminal device, and the positioning reference device needs to participate in positioning on UE, the positioning reference device also needs to be registered with the LMF. The LMF does not sense location movement of the positioning reference device, and the AMF may sense the location movement of the positioning reference device. Currently, the positioning reference device sends a message to the LMF through the AMF. However, the AMF performs transparent transmission and forwarding operations on the message from the positioning reference device, and cannot learn whether content carried in the message is related to the positioning reference device. As a result, performance of a positioning reference service is degraded.

For example, in a current manner of registering the positioning reference device with the LMF, for example, the positioning reference device sends a supplementary service message (supplementary service message) to the LMF through the AMF, so that the LMF learns that there is a positioning reference device that may be configured to assist in positioning. However, the supplementary service message belongs to or is carried in an LCS container (container), and the AMF only transparently transmits content in the LCS container, that is, the supplementary service message. Therefore, even if the positioning reference device moves out of a coverage area of the LMF, the AMF still sends the supplementary service message to the LMF. As a result, assistance positioning information sent by the LMF to the positioning reference device cannot be received by the positioning reference device, and positioning fails or is inaccurate. In addition, because a supplementary service message sent by common UE to the LMF is also carried in or belongs to the LCS container, the AMF cannot determine whether the message carried in the container is related to the PRU, and consequently the message is forwarded to an incorrect LMF. As a result, positioning fails or is inaccurate.

To improve performance of a positioning reference service, embodiments of this application provide a communication method. The communication method may be implemented by an access management network element, a location management network element (for example, a first location management network element and/or a second location management network element), and a positioning reference device. In the following, an example in which the access management network element is an AMF, the location management network element is an LMF, and the positioning reference device is a PRU is used for description.

As shown in FIG. 3, the communication method may include the following steps.

S101: The PRU determines to send a supplementary service message.

An alternative description of determining to send the supplementary service message is described above. The supplementary service message may be used to register the PRU with the LMF. In addition, the supplementary service message may also be used for periodic registration update or de-registration of the PRU. The supplementary service message may alternatively be replaced with a PRU-related registration request, attach request, or association request.

For example, in S101, the PRU may start a PRU-related registration procedure, or the PRU determines that periodic registration update time arrives.

The PRU-related registration procedure may be a procedure in which the PRU performs registration with the LMF. After the PRU is registered with the LMF, the PRU may further periodically perform registration update, that is, perform periodic registration update. Optionally, based on S101, the PRU may generate the supplementary service message. The supplementary service message may be included in a container. A container type (container type) field of the container may be set to first information. In this application, the container type field may indicate a type of the container. The first information may indicate that the container is a PRU-related container (PRU-related container), a PRU-related LCS container (PRU-related LCS container), a PRU container, or a PRU-related location service message container (PRU-related location service message).

For example, the first information may be a specified value, for example, "00"; the first information may be of an enumerated type, for example, an integer; the first information may be of a Boolean type, for example, 1 or 0; the first information may be of a character type; the first information may be of a character string type; or the first information may be a combination of one or more bit values (for example, 0 or 1).

It may be understood that in this application, the PRU may be replaced with the positioning reference device.

S102: The PRU sends a first message to the AMF. The first message includes the first information and second information.

As described in S101, the first information may indicate that the second information is the PRU-related container, the PRU-related LCS container, or the PRU-related location service message container. In other words, the first information may indicate that a type of the second information is the PRU-related container, the PRU-related LCS container, the PRU container, or the PRU-related location service message container. In other words, a container type of the second information is of a type of a container related to a positioning reference device, a PRU-related LCS container type, a PRU-related location service message container type, or a PRU container type. In other words, the second information is a container related to a positioning reference device, the PRU-related LCS container, the PRU container, or the PRU-related location service message container.

The second information may be used to carry the supplementary service message. The supplementary service message may include (or be used to carry) at least one of a registration message, an association message, an attach message, a registration modification message, an association modification message, an attach modification message, a de-registration message, a de-association message, or a de-attach message of a reference device.

Optionally, the first message is a non-access stratum message. The non-access stratum message may be mobility management signaling or session management signaling.

Optionally, the first message is an uplink non-access stratum transport (UL NAS transport) message or a mobile originated location request (mobile originated location request, MO-LR).

Optionally, the first message may further include reference location information (or referred to as location information) of the PRU. The reference location information of the PRU is, for example, user location information (user location information, ULI), a tracking area identity (tracking area identity, TAI), a tracking area code (tracking area code, TAC), a serving cell identifier (cell ID), or an access network device identifier of the PRU. The ULI may indicate a cell identifier of the PRU. The ULI may also be referred to as location information, and the TAI, the TAC, the cell identifier, the access network device identifier, or the like is referred to as reference location information.

Correspondingly, the AMF receives the first message.

Optionally, in this application, performing registration modification may be understood as performing registration modification on the positioning reference device, may be understood as performing de-registration on the positioning reference device, may be understood as de-attaching the positioning reference device, or may be understood as performing de-association on the positioning reference device. In other words, "registration modification", "association modification", "attach modification", "de-registration", and "de-association" may be replaced with each other.

Optionally, in this application, the first message may include any one or more of the following:
registration request (registration request), registration modification (registration modification request), association request (association request), de-association request, association modification, attach request (attach request), de-attach request (de-attach request), attach modification, registration complete (registration complete), de-registration accept (de-registration accept), de-registration request (de-registration request), service request (service request), service reject (service reject), service accept (service accept), control plane service request (control plane service request), uplink non-access stratum transport (UL NAS transport), mobile originated location request (mobile originated location request, MO-LR), authentication response (authentication response), authentication failure (authentication failure), configuration update complete (configuration update complete), identity response (identity response), notification response (notification response), security mode complete (security mode complete), security mode reject (security mode reject), security protected 5G non-access stratum message (security protected 5GS NAS message), 5G mobility management status (5G mobility management status, 5GMM status), network slice-specific identity authentication complete (network slice-specific authentication complete), LPP protocol data unit (LTE positioning protocol packet data unit, LPP PDU), NR protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), NR message (NR message), NR request or provide location information message (NR request/provide location information message), NR capability transfer (NR capability transfer), NR request or provide assistance data message (NR request/provide assistance data message), NR request or provide capability message (NR request/provide capability message), NR procedure (NR procedure), NR capability transfer (NR capability transfer), PDU session establishment request (PDU session establishment request), PDU session modification request (PDU session modification request), PDU session release request (PDU session release request), remote UE report (remote UE report), NG setup request (NG setup request), transmission reception point information response (TRP information response), capability exchange (capability exchange), register SS (register SS), activate SS (activate SS), deactivate SS (deactivate SS), user service (userUserService), and the like.

S103: The AMF sends the second information to the LMF based on the first information.

Therefore, based on the procedure shown in S101 to S103, the AMF may learn, based on the first information, that the second information is the PRU-related container, the PRU-related LCS container, or the PRU-related location service message container. Therefore, the AMF may learn that the second information is a message or a container related to the positioning reference device. This helps improve performance of a reference location service.

In a possible example, the first message in S102 may further include the reference location information of the PRU, for example, the user location information (user location information, ULI) of the PRU, and the user location information may include a cell identifier, a tracking area identity (tracking area ID, TAI), a public land mobile network (public land mobile network, PLMN) identifier, global positioning system (global positioning system, GPS) geographic location information, a sector identifier, a PCI, an antenna identifier, a DU identifier, or the like. Before S103, the AMF may further determine, based on the reference location information of the PRU, that the PRU is located in a service area of the LMF.

Optionally, the reference location information of the PRU may be included by a serving base station of the PRU in the first message. Alternatively, the reference location information of the PRU may be included by the PRU. For example, the first message includes the first information and the second information, and the base station may include the location information of the PRU in the first message without a need of interpreting the first information and/or the second information.

For example, when the PRU performs initial registration, the AMF may select, based on the reference location information carried in the first message sent by the PRU, an LMF whose coverage area (also referred to as a service area) includes the reference location information, and send the second information to a selected first LMF, where the second information may include a registration request, so that the PRU can be registered with the LMF, and the PRU is not registered with an LMF whose coverage area does not include a location of the PRU, thereby improving reliability of a positioning reference service.

For another example, for periodic registration update of the PRU, the AMF may determine, based on the reference location information of the PRU, that the location of the PRU is outside a service area of the first LMF. If a reference location of the PRU is outside the service area of the first LMF, the AMF selects a second LMF (which may be referred to as a target LMF) for the PRU based on the reference location information of the PRU. Correspondingly, in S103, the AMF may send the second information to the first LMF. In this case, the second information may include a periodic registration update request (which may be used as one type of the second information). In addition, the AMF may further send an identifier or an address (for example, an ID or an address of an LMF 2) of the second LMF and/or third information to the first LMF, so that the first LMF triggers an LMF change procedure. The third information may be used to trigger de-registration of the PRU from the LMF 1. Optionally, the first LMF may send the identifier of the second LMF to the PRU, so that after receiving the identifier of the second LMF, the PRU requests registration with the second LMF and/or requests de-registration from the first LMF.

Optionally, in this application, an identifier of a network element may include one or more of the following: an FQDN, an NF instance ID, a network element ID, a tunnel identifier, or a port number. In this application, an address of a network element may include an IP address and/or a MAC address.

Optionally, in this application, "the location of the PRU is outside the service area of the first LMF", "the location of the PRU is not in the service area of the first LMF", "the PRU moves out of (or leaves) the service area of the first LMF", "the first LMF is unsuitable or unable to support location for the PRU", "a serving LMF is not applicable", and "the target LMF (or the second location management network element) is a more appropriate LMF" may be replaced with each other. Optionally, in this application, "performing registration modification", "initiating registration modification", "sending a registration modification request", and "sending a registration modification indication" may be replaced with each other.

Optionally, in this application, "registration", "attach", and "association" may be replaced with each other.

The following describes an implementation process of the procedure shown in FIG. 3 with reference to the registration process and the registration update or registration modification process of the PRU.

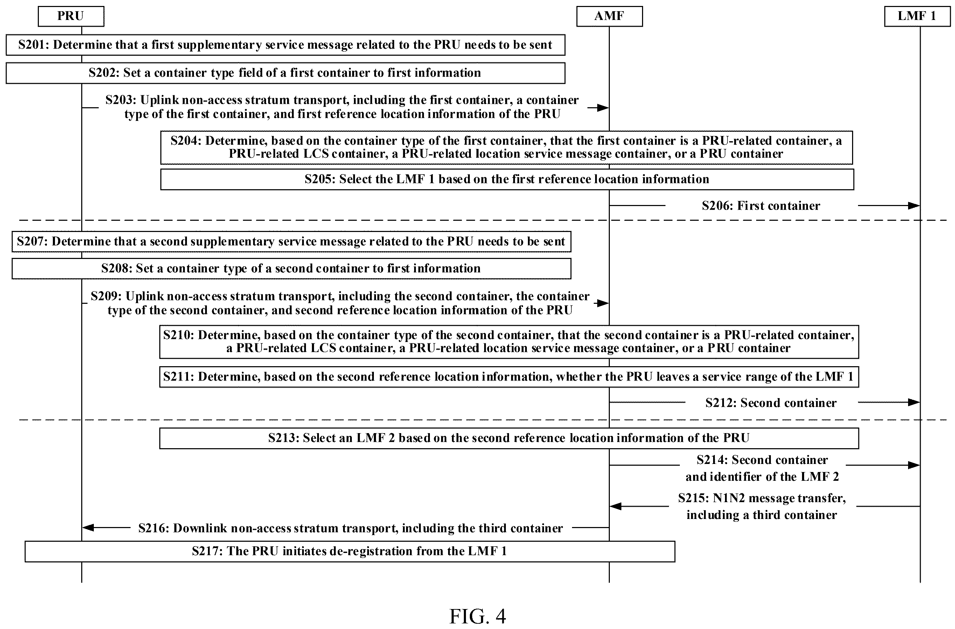

As shown in FIG. 4, an example of a process in which a PRU is registered with an LMF and an example of a process in which the PRU performs periodic registration update or periodic registration modification may include the following steps.

S201: The PRU determines that a first supplementary service message needs to be sent, where the first supplementary service message is used by the PRU to be registered with the LMF, or the supplementary service message may be a PRU registration request.

S202: The PRU sets a container type (container type) of a first container to first information, where the first information indicates that the first container is a PRU-related container, a PRU-related

LCS container, a PRU-related location service message container, or a PRU container. The first container may include the first supplementary service message.

S203: The PRU sends uplink non-access stratum transport (UL NAS transport) to an AMF, where the uplink non-access stratum transport may include the first container, the container type of the first container, and first reference location information of the PRU.

For example, the first reference location information of the PRU may be ULI (denoted as ULI 1) of the PRU.

Correspondingly, the AMF receives the uplink non-access stratum transport.

S204: Optionally, the AMF determines, based on the container type of the first container, that the first container is the PRU-related container, the PRU-related LCS container, the PRU-related location service message container, or the PRU container.

S205: The AMF selects an LMF 1 based on the first reference location information of the PRU. For example, if a coverage area of the LMF 1 includes a cell or a tracking area indicated by the ULI 1 of the PRU, the AMF determines the LMF 1, that is, selects to register the PRU with the LMF 1.

S206: The AMF sends the first container to the LMF 1.

Correspondingly, the LMF may receive the first container, obtain the first supplementary service message, and perform PRU registration.

S207: After being registered with the LMF, the PRU determines that a second supplementary service message needs to be sent. The second supplementary service message may be used to perform registration update or registration modification, for example, periodic registration update or registration modification, or may further include another message or other information.

S208: The PRU sets a container type of a second container to first information, where the first information indicates that the second container is a PRU-related container, a PRU-related LCS container, a PRU-related location service message container, or a PRU container. The second container may include the second supplementary service message.

S209: The PRU sends uplink non-access stratum transport to the AMF, where the uplink non-access stratum transport includes the second container, the container type of the second container, and second reference location information of the PRU.

For example, the second reference location information of the PRU may be ULI (denoted as ULI 2) of the PRU.

Correspondingly, the AMF receives the uplink non-access stratum transport.

S210: Optionally, the AMF determines, based on the container type of the second container, that the second container is a PRU-related container, a PRU-related LCS container, a PRU-related location service message container, or a PRU container.

S211: The AMF determines, based on the second reference location information of the PRU, whether the PRU leaves the coverage area of the LMF 1, and if the PRU does not leave the coverage area of the LMF 1, performs S212; otherwise, if the PRU has left the coverage area of the LMF 1, performs S213.

The AMF may determine a current location of the PRU based on the ULI 2. If the location is in the coverage area of the LMF 1, the AMF may determine that the PRU does not leave the coverage area of the LMF 1. If the location is outside the coverage area of the LMF 1, or the location does not belong to or is not in the coverage area of the LMF 1, the AMF may determine that the PRU has left the coverage area of the LMF 1.

S212: The AMF sends the second container to the LMF 1.

Correspondingly, the LMF receives the second container, and performs registration update or registration modification.

S213: The AMF selects an LMF 2 based on the second reference location information of the PRU. For example, if a coverage area of the LMF 2 includes a cell or a tracking area indicated by the ULI 2 of the PRU, the AMF determines the LMF 2.

S214: The AMF sends the second container and an identifier of the LMF 2 to the LMF 1.

The AMF may further include third information based on the container type of the second container, where the third information indicates the LMF 1 to perform registration modification or de-registration on the PRU.

Optionally, the second container and the identifier of the LMF 2 may be carried in a message sent by the AMF to the LMF.

Correspondingly, the LMF 1 receives the second container and the identifier of the LMF 2. S215: The LMF 1 sends N1N2 message transfer to the AMF, where the LMF 1 includes a third container based on the third information.

The third container may include a PRU registration modification request (PRU registration modification request), where the PRU registration modification request includes the identifier of the LMF 2.

S216: The AMF sends downlink non-access stratum transport (DL NAS transport) to the PRU, where the downlink non-access stratum transport includes the third container.

Correspondingly, the PRU receives the third container.

Optionally, if the PRU is in an RRC idle (idle) state before S216, before S216, the AMF may send a paging message, so that the PRU is restored to a connected state.

S217: The PRU initiates de-registration from the LMF 1.

The PRU may initiate de-registration from the LMF 1 after receiving the third container carrying the identifier of the LMF 2.

For example, in S217, the PRU may send a de-registration request to the LMF 1.

Based on the procedure in FIG. 4, when sending a message, the PRU needs to set a container type of a carried container to the first information, so that the AMF learns that the container is a PRU-related container or a PDU container. In addition, the PRU may further send reference location information together. Therefore, the AMF may select, based on the reference location information of the PRU, an appropriate LMF to perform a positioning reference service, to avoid that the PRU is registered with an LMF whose location is not as expected, or avoid that the LMF 1 still performs a location service with the PRU after the PRU moves out of a source LMF (for example, the LMF 1), thereby improving performance of a positioning reference service.

It may be understood that the first supplementary service message or the first message and/or the second supplementary service message shown in FIG. 4 may be considered as the supplementary service message in S101. If the first supplementary service message is the supplementary service message in S101, correspondingly, the second information is the first container, and the first information may indicate the type of the first container. The uplink non-access stratum transport sent by the PRU to the AMF in S203 may be considered as the first message sent in S102, and S206 may be considered as a possible implementation of S103. If the second supplementary service message is the supplementary service message in S101, correspondingly, the second information is the second container, and the first information indicates the container type of the second container. The uplink non-access stratum transport sent by the PRU to the AMF in S209 may be considered as the first message sent in S102, and S214 may be considered as a possible implementation of S103.

Optionally, in this application, S101 may alternatively be replaced with: The PRU starts a PRU-related registration procedure. In other words, that the PRU starts the PRU-related registration procedure may be used as a possible implementation of S101.

Optionally, in this application, S102 may alternatively be replaced with: The PRU sends a first message, where the first message includes first information and second information, the first information indicates that the second information is a PRU-related container, and the second information may include (or be used to carry) a supplementary service message. Correspondingly, the AMF may receive the first message.

Alternatively, optionally, in this application, S102 may alternatively be replaced with: The PRU sends a first message, where the first message includes first information, and the first information indicates that a location service request is to transmit a PRU message, a PRU-related message, PRU information, or PRU-related information. The access management network element sends second information to a location management network element based on the first information. Correspondingly, the AMF may receive the second information.

Alternatively, optionally, in this application, S102 may alternatively be replaced with: The PRU sends a first message, where the first message includes first information, and the first information indicates that a location service request is to transmit a PRU message/a PRU-related message/PRU information/PRU-related information. Correspondingly, the AMF may receive the first message. Alternatively, optionally, in this application, S102 may alternatively be replaced with: The PRU sets a container type to first information, where the first information indicates that second information (or a container) is a PRU-related container, a PRU-related location service message container, a PRU container, or a PRU message container; and the PRU sends the first information to an access management network element. Correspondingly, the AMF may receive the first information. Optionally, the AMF may further receive the second information (or the container). The second information and the first information may be carried in a same message for sending, or the second information may be sent independently of the first information.

Optionally, the second information may include a registration message, an association message, an attach message, a registration modification message, an association modification message, an attach modification message, a de-registration message, a de-association message, or a de-attach message.

Based on a same concept, an embodiment of this application further provides a communication apparatus. The communication apparatus may include corresponding hardware structures and/or software modules for performing the functions shown in the foregoing methods. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

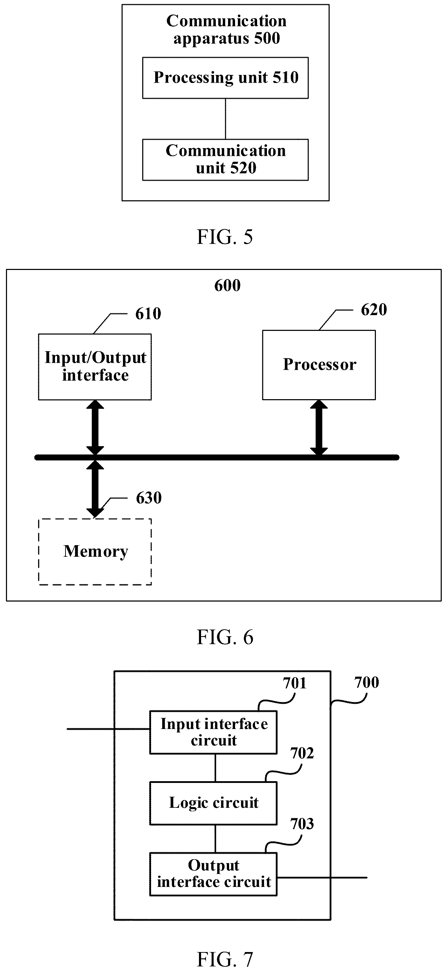

FIG. 5 to FIG. 7 each are a diagram of a structure of a possible communication apparatus according to an embodiment of this application. The communication apparatuses may be configured to implement functions of the network device and/or the terminal apparatus in the foregoing method embodiments, and therefore can also implement beneficial effects of the foregoing method embodiments. In a possible implementation, the communication apparatus may be an access management network element, a positioning reference device, or a location management network element, or may be a component thereof. For related details and effects, refer to the descriptions in the foregoing embodiments.

As shown in FIG. 5, a communication apparatus 500 includes a processing unit 510 and a communication unit 520. The communication unit 520 may implement a corresponding communication function, and the processing unit 510 is configured to process data. The communication unit 520 may alternatively be a transceiver unit, an input/output interface, or the like. The communication apparatus 500 may be configured to implement functions of the first terminal apparatus and/or the network device in the method embodiment shown in FIG. 3 or FIG. 4.

It may be understood that in embodiments of this application, division into modules is an example, and is merely logical function division. In actual implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software functional module.

FIG. 6 shows a communication apparatus 600 according to an embodiment of this application. The communication apparatus 600 is configured to implement the communication method provided in this application. The communication apparatus 600 may be a communication apparatus to which the communication method is applied, may be a component in the communication apparatus, or may be an apparatus that can be used in combination with the communication apparatus. The communication apparatus 600 may be an access management network element, a positioning reference device, or a location management network element, or may be a component thereof. The communication apparatus 600 may be a chip system or a chip. In this embodiment of this application, the chip system may include a chip, or may include the chip and another discrete component. The communication apparatus 600 includes at least one processor 620, configured to implement the communication method provided in embodiments of this application. The communication apparatus 600 may further include an input/output interface 610, and the input/output interface may include an input interface and/or an output interface. In this embodiment of this application, the input/output interface 610 may be configured to communicate with another apparatus via a transmission medium, and a function of the input/output interface 610 may include sending and/or receiving. For example, when the communication apparatus 600 is the chip, the communication apparatus 600 performs transmission with another chip or device through the input/output interface 610. The processor 620 may be configured to implement the method described in the foregoing method embodiments.

For example, the processor 620 may be configured to perform an action performed by the processing unit 510, and the input/output interface 610 may be configured to perform an action performed by the communication unit 520. Details are not described again.

Optionally, the communication apparatus 600 may further include at least one memory 630, configured to store program instructions and/or data. The memory 630 is coupled to the processor 620. The coupling in this embodiment of this application may be an indirect coupling or a communication connection between apparatuses, units, or modules in an electrical form, a mechanical form, or another form, and is used for information exchange between the apparatuses, the units, or the modules. The processor 620 may cooperate with the memory 630. The processor 620 may execute the program instructions stored in the memory 630. At least one of the at least one memory may be integrated with the processor.

In this embodiment of this application, the memory 630 may be a non-volatile memory, for example, a hard disk drive (hard disk drive, HDD) or a solid-state drive (solid-state drive, SSD), or may be a volatile memory (volatile memory) such as a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

In embodiments of this application, the processor 620 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module. FIG. 7 shows a communication apparatus 700 according to an embodiment of this application. The communication apparatus 700 is configured to implement the communication method provided in this application. The communication apparatus 700 may be a communication apparatus to which the communication method shown in embodiments of this application is applied, or may be a component in the communication apparatus, or may be an apparatus that can be used in combination with the communication apparatus. The communication apparatus 700 may be an access management network element, a positioning reference device, or a location management network element, or may be a component thereof. The communication apparatus 700 may be a chip system or a chip. In this embodiment of this application, the chip system may include a chip, or may include the chip and another discrete component. A part or all of the communication method provided in the foregoing embodiments may be implemented by hardware or software. When the communication method is implemented by hardware, the communication apparatus 700 may include an input interface circuit 701, a logic circuit 702, and an output interface circuit 703. Optionally, an example in which the apparatus is configured to implement a function of a receiving end is used. The input interface circuit 701 may be configured to perform a receiving action performed by the communication unit 520, the output interface circuit 703 may be configured to perform a sending action performed by the communication unit 520, and the logic circuit 702 may be configured to perform an action performed by the processing unit 510. Details are not described again.

Optionally, in specific implementation, the communication apparatus 700 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. The instructions, when executed on a computer, cause the computer to perform the foregoing method embodiments.

An embodiment of this application provides a communication system, including an access management network element, a positioning reference device, or a location management network element, configured to implement the methods/method shown in FIG. 3 and/or FIG. 4.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

It should be noted that a part of this patent application document includes copyright-protected content. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors. Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an access management network element, a first message, wherein the first message comprises first information and second information, the first information indicates that the second information is of a type of a container related to a positioning reference device, and the second information is used to carry a supplementary service message; and
sending, by the access management network element, the second information to a first location management network element based on the first information.

2. The method according to claim 1, wherein the first message further comprises reference location information of the positioning reference device, and the method further comprises:
determining, by the access management network element based on the reference location information, that the positioning reference device is located in a service area of the first location management network element.

3. The method according to claim 1 or 2, wherein the first message comprises reference location information of the positioning reference device, and the method further comprises:
determining, by the access management network element based on the reference location information, that the positioning reference device is located outside a service area of the first location management network element; and
sending, by the access management network element, third information to the first location management network element, wherein the third information indicates the first location management network element to perform registration modification.

4. The method according to claim 3, wherein the method further comprises:
selecting, by the access management network element, a second location management network element; and
sending, by the access management network element, an identifier or an address of the second location management network element to the first location management network element.

5. The method according to any one of claims 1 to 4, wherein the supplementary service message comprises registration information, an association message, an attach message, a de-registration message, a de-association message, or a de-attach message.

6. A communication method, comprising:
determining, by a positioning reference device, to send a supplementary service message; and
sending, by the positioning reference device, a first message, wherein the first message comprises first information and second information, the first information indicates that the second information is of a type of a container related to a positioning reference device, and the second information is used to carry the supplementary service message.

7. The method according to claim 6, wherein the method further comprises:
receiving, by the positioning reference device, a registration modification message from a first location management network element.

8. The method according to claim 6 or 7, wherein the registration modification message comprises an identifier or an address of a second location management network element, and the method comprises:
sending, by the positioning reference device, a registration message to the second location management network element.

9. The method according to any one of claims 6 to 8, wherein the supplementary service message comprises registration information, an association message, an attach message, a de-registration message, a de-association message, or a de-attach message.

10. A communication method, comprising:
receiving, by a first location management network element, second information from an access management network element, wherein the second information indicates to perform registration modification; and
performing, by the first location management network element, registration modification based on the second information.

11. The method according to claim 10, wherein the method further comprises:
receiving, by the first location management network element, an identifier of a second location management network element from the access management network element; and
sending, by the first location management network element, the identifier of the second location management network element to the positioning reference device.

12. The method according to claim 11, wherein the identifier of the second location management network element is determined based on reference location information of the positioning reference device.

13. A communication apparatus, comprising:
a receiving unit, configured to receive a first message, wherein the first message comprises first information and second information, the first information indicates that the second information is of a type of a container related to a positioning reference device, and the second information is used to carry a supplementary service message; and
a sending unit, configured to send the second information to a first location management network element based on the first information.

14. The apparatus according to claim 13, wherein the first message further comprises reference location information of the positioning reference device, and the apparatus further comprises a processing module, configured to:
determine, based on the reference location information, that the positioning reference device is located in a service area of the first location management network element.

15. The apparatus according to claim 13 or 14, wherein the first message comprises reference location information of the positioning reference device, and the apparatus further comprises a processing module, configured to:
determine, based on the reference location information, that the positioning reference device is located outside a service area of the first location management network element; and
the sending unit is further configured to:
send third information to the first location management network element, wherein the third information indicates the first location management network element to perform registration modification.

16. The apparatus according to claim 15, wherein the processing module is further configured to:
select a second location management network element; and
the sending unit is further configured to:
send an identifier or an address of the second location management network element to the first location management network element.

17. The apparatus according to any one of claims 13 to 16, wherein the supplementary service message comprises registration information, an association message, an attach message, a de-registration message, a de-association message, or a de-attach message.

18. A communication apparatus, comprising:
a processing unit, configured to determine to send a supplementary service message; and
a communication unit, configured to send a first message, wherein the first message comprises first information and second information, the first information indicates that the second information is of a type of a container related to a positioning reference device, and the second information is used to carry the supplementary service message.

19. The apparatus according to claim 18, wherein the communication unit is further configured to:
receive a registration modification message from a first location management network element.

20. The apparatus according to claim 18 or 19, wherein the registration modification message comprises an identifier or an address of a second location management network element, and the communication unit is further configured to:
send a registration message to the second location management network element.

21. The apparatus according to any one of claims 18 to 20, wherein the supplementary service message comprises registration information, an association message, an attach message, a de-registration message, a de-association message, or a de-attach message.

22. A communication apparatus, comprising:
a communication unit, configured to receive second information from an access management network element, wherein the second information indicates to perform registration modification; and
a processing unit, configured to perform registration modification based on the second information.

23. The apparatus according to claim 22, wherein the communication unit is further configured to:
receive an identifier of a second location management network element from the access management network element; and
send the identifier of the second location management network element to the positioning reference device.

24. The apparatus according to claim 23, wherein the identifier of the second location management network element is determined based on reference location information of the positioning reference device.

25. A communication apparatus, comprising a processor, wherein the processor is configured to execute computer program instructions stored in a memory, to implement the method according to any one of claims 1 to 5, implement the method according to any one of claims 6 to 9, or implement the method according to any one of claims 10 to 12.

26. A computer-readable storage medium, comprising computer program instructions, wherein when the computer program instructions are executed by a computer, the receiver is enabled to implement the method according to any one of claims 1 to 5, implement the method according to any one of claims 6 to 9, or implement the method according to any one of claims 10 to 12.
